# EUROPÄISCHE PATENTSCHRIFT

(11) **EP 3 393 754 B1**
(45) Veröffentlichungstag und Bekanntmachung des Hinweises auf die Patenterteilung: **19.05.2021**
(21) Anmeldenummer: 15816770.0
(22) Anmeldetag: 21.12.2015
(51) Int. Cl.: B29C 64/393, B29C 64/106, B29C 64/112, B29C 64/182, B29C 64/118, B33Y 50/02, B33Y 30/00

(54) **VERFAHREN UND VORRICHTUNG ZUR HERSTELLUNG EINES OBJEKTS UNTER EINSATZ EINER 3D-DRUCKVORRICHTUNG**
METHOD AND DEVICE FOR PRODUCING AN OBJECT BY USING A 3D PRINTING DEVICE
PROCÉDÉ ET DISPOSITIF DE FABRICATION D'UN OBJET À L'AIDE D'UN DISPOSITIF D'IMPRESSION 3D

(43) Veröffentlichungstag der Anmeldung: 31.10.2018
(73) Patentinhaber: Wacker Chemie AG, 81737 München (DE)
(72) Erfinder: PETER, Maximilian, 84503 Altötting (DE); AGER, Dag, 84031 Landshut (DE); SCHABLITZKI, Peter, 84032 Landshut (DE); WIRTZ, Peter, 84032 Landshut (DE)
(74) Vertreter: Bitterlich, Bianca
(86) Internationale Anmeldenummer: PCT/EP2015/080742
(87) Internationale Veröffentlichungsnummer: WO 2017/108071

(56) Entgegenhaltungen:
- EP-A1- 2 835 249
- WO-A1-2015/014290
- WO-A1-2015/107333
- WO-A1-2015/120538
- US-A1- 2015 343 688
- US-A1- 2015 352 839

## Beschreibung

Die Erfindung betrifft ein Verfahren zur Herstellung eines Objekts gemäß Anspruch 1, eine Vorrichtung gemäß Anspruch 9 und ein Computerprogramm gemäß Anspruch 14.

### Stand der Technik

Zur Herstellung von Prototypen, Kleinserien oder Einzelstücken eines Gegenstands sind aus dem Stand der Technik eine Vielzahl verschiedener generativer Fertigungsverfahren bekannt. Diese auch als 3D-Druck bezeichneten Verfahren haben gemeinsam, dass eine Fertigung eines Gegenstands bzw. Objekts direkt auf Basis eines Computermodells erfolgt. Zur Herstellung eines Objekts wird beispielsweise ein Pulver durch Aufbringen eines Härters selektiv verfestigt, wobei der Härter in einem vom herzustellenden Objekt abhängigen Muster auf das Pulver aufgetragen wird. Weitere Verfahren umfassen das Lasersintern, bei dem nach einem vorgegebenen Muster Pulver durch Aufschmelzen mit einem Laser in der gewünschten Form verfestigt wird, sowie Fused Filament Fabrication, bei dem ein Objekt schichtweise aus einem schmelzfähigen Kunststoff hergestellt wird. Ebenfalls bekannt sind Verfahren, bei denen Flüssigkeit tröpfchenweise mit Düsen abgegeben und beispielsweise durch Einwirkung von UV-Strahlung ausgehärtet wird.

DE 10 2011 012 412 A1 und DE 10 2011 012 480 A1 beschreiben eine Vorrichtung sowie ein Verfahren zur schrittweisen Herstellung von 3D-Strukturen mit einer Druckkopfanordnung mit wenigstens zwei, vorzugsweise 50 bis 200 Druckkopfdüsen, welche das ortsselektive Aufbringen ggf. mehrerer photovernetzbarer Materialien mit unterschiedlicher Photoempfindlichkeit ermöglicht, wobei die photovernetzbaren Materialien anschließend ortsselektiv durch elektromagnetische Strahlung, insbesondere durch Zweiphotonen- oder Mehrphotonenprozesse im Fokusbereich eines Lasers, verfestigt werden. Das Aufbringen der photovernetzbaren Materialien mittels Inkjetdruck stellt an die Viskosität der photovernetzbaren Materialien spezielle Anforderungen. So zeichnen sich die photovernetzbaren Materialien durch eine Viskosität von weniger als 200 mPa·s, insbesondere weniger als 80 mPa·s, besonders bevorzugt weniger als 40 mPa·s aus. Um eine ausreichende Vernetzung des aufgebrachten Materials mittels Zwei- bzw. Mehrphotonenpolymerisation zu erzielen, bedarf es auf die Laserwellenlänge abgestimmter Photoinitiatoren und einer photovernetzbare Gruppen enthaltenden polymeren Vernetzer-Komponente, wobei die photovernetzbaren Gruppen der Klasse der Acrylate, Methacrylate, Acrylamide, Methylacrylamide, Urethanacrylate, Urethanmethacrylate, Ureaacrylate und Ureamethacrylate angehören. Das beschriebene Verfahren eignet sich jedoch nicht zur Herstellung von Formteilen bestehend aus Silikonelastomeren. Zum einen sind die verwendeten Photoinitiatoren, Photosensitizer, Coinitiatoren etc. in den (unpolaren) Silikonmassen nur schlecht löslich, was zu Trübungen, Mikrophasenseparation und Inhomogenitäten führt. Die radikalische Härtung von mit den voranstehend genannten photovernetzbaren Gruppen funktionalisierten Silikonen weist bekanntermaßen das Problem der durch Sauerstoff verursachten Inhibierung auf, wodurch die Vernetzungsgeschwindigkeit erheblich herabgesetzt wird und klebrige Oberflächen resultieren. Steuert man diesem Effekt durch Erhöhung der Funktionsdichte an z.B. Acrylatgruppen entgegen, resultieren nichtelastische, spröde Vulkanisate. Schließlich setzt die für eine Mehrphotonenpolymerisation (insbesondere bedingt durch die niedrige Funktionsdichte an photopolymerisierbaren Gruppen) benötigte, durch gepulste Femtosekundenlaser erzeugte extrem hohe lokale Photonendichte Zersetzungsreaktionen (Carbonisierung) im Silikon in Gang, was zu inaktzeptablen Verfärbungen und Materialschädigungen führt.

Das ortsselektive Aufbringen einer vernetzbaren Masse kann z.B. mittels Extrusion erfolgen. In DE 10 2012 204 494 A1 wird die Herstellung einer Primärauflage aus Silikon zur Wundversorgung beschrieben, die u.a. im 3D-Druck Verfahren erfolgen kann. Die Primärauflage besitzt die Form eines Gitters oder Netzes, welches in Analogie zum Filament-3D-Druck durch mäanderförmiges kontinuierliches Extrudieren von Silikonkautschukmassen durch eine Düse und anschließende Vernetzung gebildet wird.

Ein ortsselektives Aufbringen einer vernetzbaren Masse kann auch mit Druckköpfen erfolgen, die ähnlich wie bei einem 2D-Tintenstrahldrucker eine Vielzahl von Düsen aufweisen. Aus WO 2008/151063 ist eine Vorrichtung bekannt, die auf der Verwendung von Tintenstrahl-Druckköpfen basiert. Dabei wird eine Modellierflüssigkeit eingesetzt, die bei Zugabe eines Aktivators aushärtet. Die Vorrichtung weist dazu mehrere Druckköpfe auf, wobei ein Druckkopf die Modellierflüssigkeit und ein weiterer Druckkopf den Aktivator abgibt.

US 2012/0156319 A1 betrifft eine Vorrichtung zur Herstellung dreidimensionaler Objekte aus einem verfestigbaren Material. Die Vorrichtung umfasst eine Verarbeitungseinheit, in der das verfestigbare Material in eine flüssige Phase überführt und in ein Reservoir eingegeben wird. Aus dem Reservoir wird das Material über eine Abgabeeinheit in Form von einzelnen Tropfen abgegeben, um das Objekt zu formen.

Aus EP 0 915 760 B1 ist ein dreidimensionales Druckverfahren bekannt, mit dem fühlbare Strukturen auf einer Oberfläche erzeugt werden. Die Strukturen werden durch gezieltes Aufbringen von Tropfen auf die Oberfläche hergestellt, wobei mehrere verschiedene Teilabschnitte erzeugt werden können. Dabei können benachbarte Teilabschnitte aus verschiedenen Materialien hergestellt werden. Das aufgebrachte Material wird nach dem Aufbringen mit UV-Strahlung gehärtet.

DE 10 2013 003 167 A1 betrifft ein Verfahren zur Herstellung eines dreidimensionalen Gegenstands durch generativen Aufbau. Bei dem Verfahren wird wenigstens ein verfestigbares Material gezielt ausgetragen, um den Gegenstand herzustellen. Beim Ausbringen werden strukturell unterschiedliche Bereiche des Gegenstands erzeugt, wobei beim Ausbringen in den verschiedenen Bereichen Raumstrukturen gemäß ausgewählter Gestaltungskriterien erzeugt werden.

DE 10 2011 106 614 A1 betrifft ein Verfahren und eine Vorrichtung zur Herstellung eines dreidimensionalen Gegenstands, wobei der Gegenstand aus einem verfestigbaren Material aufgebaut wird, welches entweder im Ausgangszustand in flüssiger Phase vorliegt oder verflüssigt werden kann. Das flüssige Material wird in Form von Tropfen ausgetragen und zum Herstellen des Objekts auf einem Objektträger platziert. Der Objektträger und eine Austrittsöffnung für das Material sind zueinander ausrichtbar, wobei eine Achse der Austrittsöffnung in Bezug auf den Objektträger verstellbar ist.

Aus DE 10 2005 050 185 A1 ist eine Harzformulierung zur Herstellung von Medizinprodukten mittels 3D-Druck bekannt. Bei dem 3D-Druckverfahren wird das Material zunächst erwärmt, so dass es in einen flüssigen Zustand übergeht. Im flüssigen Zustand wird das Material über Tintenstrahldüsen abgegeben, wobei schichtweise ein dreidimensionaler Gegenstand aufgebaut wird. Nach Austritt aus der Düse erstarrt das Material und kann mit UV-Strahlung ausgehärtet werden Aus US 2015/343688 A1, US 2015/352839 A1, EP 2835249 A1 und WO 2015/120538 A1 sind ebenfalls 3D-Druckverfahren und Vorrichtungen bekannt.

Die mit den aus dem Stand der Technik bekannten generativen Verfahren erzielbare Qualität der Objekte erreicht bisher nicht die konstante Qualität vergleichbarer, mittels Spritzguss hergestellter Objekte. Auch ist es mit den bekannten Verfahren nicht möglich, eine gleichbleibende Qualität des Endproduktes sicherzustellen, wie es für den industriellen Einsatz der hergestellten Objekte unabdingbar ist.

Eine Aufgabe der Erfindung ist ein verbessertes Verfahren zur generativen Fertigung von Objekten sowie eine entsprechende Vorrichtung bereitzustellen, mit dem Objekte hoher Qualität, z.B. in Bezug auf Oberfläche und Formtreue, herstellbar sind. Eine weitere Aufgabe der Erfindung ist es ein Verfahren bereitzustellen, mit dem sich eine gleichbleibende Qualität der hergestellten Objekte sicherstellen lässt.

### Offenbarung der Erfindung

Es wird ein Verfahren zur Herstellung eines Objekts unter Einsatz einer 3D-Druckvorrichtung vorgeschlagen. Die 3D-Druckvorrichtung weist zumindest einen Druckkopf mit zumindest einer Austragevorrichtung auf, wobei die Austragevorrichtung dazu eingerichtet ist, Druckmassen an Soll-Positionen zu setzen, um das Objekt generativ zu erzeugen. Ferner ist vorgesehen, dass die Position des Druckkopfes durch eine Positionsmessung laufend ermittelt wird und die Druckmassen von der Austragevorrichtung in Abhängigkeit von der laufend ermittelten Position des Druckkopfes gesetzt werden.

Es können insbesondere mehrere, auch technisch unterschiedliche Austragevorrichtungen für verschiedene Druckmassen in der 3D-Druckvorrichtung vorgesehen sein, welche derartig betrieben werden.

Die 3D-Druckvorrichtung umfasst eine Basisplatte, auf der das Objekt durch Austragen von Druckmasse aus der mindestens einen Austragevorrichtung des mindestens einen Druckkopfs aufgebaut wird. Die Basisplatte und der mindestens eine Druckkopf werden hierbei relativ zueinander bewegt, wobei Relativbewegungen in allen drei Raumrichtungen X, Y und Z möglich sind. Hierzu kann beispielsweise der mindestens eine Druckkopf derart angeordnet sein, dass dieser in X- und Y-Richtung beweglich ist und die Basisplatte kann derart angeordnet sein, dass diese in Z-Richtung beweglich ist. Auch weitere Konfigurationen sind hierbei denkbar, beispielsweise kann die Basisplatte in Y-Richtung beweglich angeordnet werden und der mindestens eine Druckkopf kann derart angeordnet werden, dass dieser in X- und Z-Richtung beweglich ist. Alternativ oder zusätzlich hierzu kann vorgesehen sein, die Basisplatte und/oder den Druckkopf schwenkbar auszugestalten, so dass beliebige Raumanordnungen möglich sind.

Die jeweilige Austragevorrichtung weist eine Austragsachse auf, die die Richtung angibt, in die Material aus der Austragevorrichtung ausgetragen wird. Üblicherweise ist die Austragsachse derart mit Bezug zur Basisplatte orientiert, dass diese senkrecht zur Basisplatte steht. Optional kann vorgesehen sein, dass die 3D-Druckvorrichtung derart konfiguriert ist, dass zusätzlich die Ausrichtung der Austragsachse relativ zur Basisplatte verändert werden kann.

Die Austragevorrichtung ist bevorzugt eingerichtet, in Richtung der Austragsachse Druckmassen in Form einzelner isolierter Tropfen, als Tropfenreihe oder in Form eines Strangs abzugeben. Fließende Übergänge zwischen diesen Formen sind möglich. Im Rahmen dieser Beschreibung wird ein aus der Austragevorrichtung ausgetragener und auf der Basisplatte bzw. auf dem Objekt gesetzter Tropfen einer Druckmasse als Voxel bezeichnet. Unter einer gesetzten Druckmasse wird sowohl ein Voxel als auch ein Strang verstanden. Bei der verwendeten Druckmasse handelt es sich bevorzugt um ein Material, welches zumindest während der Verarbeitung in einer fließfähigen Form vorliegt und nach dem Austrag ausgehärtet werden kann.

Zur Abgabe einzelner Tropfen kann die Austragevorrichtung eine oder mehrere Düsen umfassen, die Flüssigkeitstropfen aus Druckmasse in Richtung der Basisplatte emittieren, ähnlich wie es die Düsen eines Tintenstrahldruckers tun. Daher werden diese Düsen auch als Jettingdüsen bezeichnet. Verschiedene Ausführungsformen sind dem Fachmann bekannt. Die Jettingdüsen sind derart eingerichtet, dass diese nur auf Anforderung kontrolliert einen Tropfen abgeben. Bei bevorzugten Ausführungsformen der Jettingdüsen kann beim Austrag der Druckmasse das Volumen des Tropfens beeinflusst werden, so dass Tropfen unterschiedlicher Größe erzeugt werden können.

Es kann beispielsweise ein Heizelement in der Jettingdüse vorgesehen sein, mit dem die Druckmasse erhitzt wird und ein Tropfen von einer entstehenden Dampfblase aus der Jettingdüse getrieben wird, dies ist als Bubble-Jet bekannt.

Eine weitere Möglichkeit ist das Anordnen eines Piezoelements, welches sich aufgrund einer elektrischen Spannung verformt und hierdurch einen Tropfen aus einer Jettingdüse pressen kann. Derartige Tintenstrahldruckverfahren sind dem Fachmann aus dem klassischen Druck und aus dem sogenannten 3D-Druck, bei dem aus einer fotopolymerisierbaren Tinte dreidimensionale Gegenstände schichtweise aufgebaut werden, grundsätzlich bekannt. Derartige Druckköpfe, wie sie im Tintenstrahldruck oder in Multijet-3D-Druck eingesetzt werden, können typischerweise niederviskose Drucktinten bzw. Druckmassen dosieren, z.B. solche mit Viskositäten unter 50 mPa·s.

In den Druckköpfen in dem erfindungsgemäßen Verfahren werden bevorzugt Austragevorrichtungen eingesetzt, die auf Jet-Ventilen mit Piezoelementen basieren. Diese ermöglichen das Austragen sowohl niedrigviskoser Materialien, wobei Tropfenvolumen für Tropfen von einigen wenigen Pikolitern (pL) (2 pL entsprechen einem Tropfendurchmesser von ca. 0,035 µm) realisiert werden können, als auch mittel- und hochviskoser Materialien wie der Silikonkautschukmassen, wobei Piezo-Druckköpfe mit einem Düsendurchmesser zwischen 50 und 500 µm bevorzugt werden und Tropfenvolumen im Nanoliter-Bereich (1 bis 100 nL) erzeugt werden können. Mit niedrigviskosen Massen (< 100 mPa·s) können diese Druckköpfe Tröpfchen mit sehr hoher Dosierfrequenz abscheiden (ca. 1 - 30 kHz), während mit höherviskosen Massen (> 100 Pa·s) in Abhängigkeit von den rheologischen Eigenschaften (scherverdünnendes Verhalten) Dosierfrequenzen bis zu ca. 500 Hz erzielt werden können. Geeignete Jettingdüsen werden beispielsweise in DE 10 2011 108 799 A1 beschrieben.

Zur Abgabe von Strängen aus Druckmasse wird die Druckmasse unter Druck auf einem Vorratsbehälter, z.B. aus einer Kartusche, Spritze oder einem Fass, durch eine Düse als Strang herausgepresst und auf der Basisplatte zum Objekt selektiv abgeschieden. Derartige Austragevorrichtungen werden im Rahmen dieser Beschreibung als Dispenser bezeichnet. Der Druckaufbau kann z.B. mittels Luftdruck oder mechanisch, z.B. durch einen kleinen Extruder, mittels einer Kolbenpumpe oder mittels einer Exzenterschnecke erfolgen. Verschiedene Ausführungsformen sind dem Fachmann bekannt.

Um mit den ausgetragenen Druckmassen ein Objekt aufzubauen, werden die Druckmassen gemäß einem vorgegebenen Schema auf der Basisplatte abgelegt, wobei eine erste Materialschicht ausgebildet wird. Nach dem Ausbilden der ersten Materialschicht wird z.B. der Abstand zwischen der Austragevorrichtung und der Basisplatte vergrößert und es wird die nächste Materialschicht ausgebracht. Es folgen weitere Materialschichten, die jeweils nach einem vorgegebenen Schema abgelegt werden, bis das gewünschte Objekt fertiggestellt ist.

Das Austragen der Druckmassen erfolgt nach einem Schema, welches aus einer Vorlage abgeleitet wird. Die Vorlage wird in der Regel mit einer CAD-Software (Computer-Aided Design, rechnerunterstütztes Konstruieren) entworfen oder wird durch dreidimensionales Scannen eines Gegenstands erstellt. Zur Ableitung des Schemas für den Materialaustrag berechnet die Software typischerweise horizontale Schnitte der Vorlage, wobei jeder dieser Schnitte einer Materialschicht entspricht. Im Anschluss wird berechnet, wie die Druckmassen in der jeweiligen Schicht platziert werden müssen. Hierbei wird berücksichtigt, ob der Austrag der Druckmassen in Form von Voxeln, in Form von Strängen oder in einer Kombination aus Voxeln und Strängen erfolgt.

Gegebenenfalls wird beim Ableiten des Schemas auch das Setzen von Stützmaterial eingeplant. Das Setzen von Stützmaterial kann erforderlich sein, wenn das herzustellende Objekt Hohlräume, Hinterschnitte, überhängende, freitragende oder dünnwandige Teile aufweisen soll, da die Druckmassen nicht frei im Raum schwebend gesetzt werden können. Das Stützmaterial füllt während des Druckprozesses Raumvolumina aus und dient als Basis oder als Gerüst, um darauf die Druckmassen setzen und aushärten zu können. Das Stützmaterial wird nach Beendigung des Druckprozesses wieder entfernt und gibt Hohlräume, Hinterschnitte sowie überhängende, freitragende oder dünnwandige Geometrien des Objekts frei. In der Regel wird als Stützmaterial ein von dem Material der Druckmassen abweichendes Material verwendet. Abhängig von der Geometrie des Objekts wird die notwendige Form des Stützmaterials berechnet. Bei der Berechnung der Form des Stützmaterials können verschiedene Strategien eingesetzt werden, um beispielsweise möglichst wenig Stützmaterial zu verwenden oder um die Maßhaltigkeit des Produktes zu erhöhen.

Bei der Ableitung des Schemas für den Materialaustrag aus den horizontalen Schnitten können verschiedene Verfahrstrategien verwendet werden, wobei durch die Wahl der Verfahrstrategie die Eigenschaften des hergestellten Objekts beeinflusst werden können. Bei einem Austrag in Form von Voxeln kann beispielsweise eine Dual-Verfahrstrategie, eine Xing-Verfahrstrategie oder eine Border-Verfahrstrategie verwendet werden.

Bei der Dual-Verfahrstrategie wird der mindestens eine Druckkopf entlang einer gewählten Hauptdruckrichtung in Bezug auf die Basisplatte zeilenweise hin und her bewegt und linienweise Druckmasse dosiert. Nach jeder Zeile wird der Druckkopf um eine Zeilenbreite senkrecht zur Drucklinie weiter bewegt, danach wiederholt sich der Austrag der Druckmasse. Der Prozess ähnelt dabei dem Druck eines herkömmlichen Tintenstrahldruckers.

Die Xing-Verfahrstrategie entspricht weitestgehend der Dual-Verfahrstrategie. Im Gegensatz zur Dual-Verfahrstrategie wird nach jeder oder nach jeder n-ten Materialschicht (wobei n eine natürliche Zahl ist) die Hauptdruckrichtung um 90° gedreht. Dies führt zu einer genaueren Einhaltung der Formstabilität des Objekts, weil durch die Drehung der Materialschichten eine gleichmäßige Verteilung der Druckmasse sichergestellt wird.

Vorteile der Dual-Verfahrstrategie als auch der Xing-Verfahrstrategie sind, dass beispielsweise eine hohe Genauigkeit der Kanten des Objekts erzielt werden kann.

Bei der Border-Verfahrstrategie wird für jede Materialschicht zuerst die äußere Umrandung des Objekts hergestellt und im Anschluss die eingeschlossene Fläche z.B. mittels der Dual-Verfahrstrategie oder der Xing-Verfahrstrategie aufgefüllt. Bei der Border-Verfahrstrategie kann die äußere Umrandung der zu druckenden Schicht mit kleineren Voxeln in höherer Auflösung erzeugt werden als das Innere der zu druckenden Schicht oder als das innere Volumen des Objekts. Im Inneren des herzustellenden Objekts können größere Voxel zum Auffüllen verwendet werden, ohne dass sich die damit einhergehende geringere Auflösung auf die Genauigkeit der geometrischen Abmessungen oder auf die Oberflächenqualität des herzustellenden Objekts auswirkt.

Die benannten Verfahrstrategien stellen Grundmuster dar. Sie können auch im Rahmen desselben Objekts kombiniert und variiert werden, wenn es zweckmäßig erscheint. Auch Mischformen zwischen den verschiedenen Verfahrstrategien sind denkbar.

Sind die Druckmassen als Voxel ausgebildet, so kann zusätzlich zu der Wahl der Verfahrstrategie ein Voxel-Versatz beim Erstellen des Schemas für den Materialaustrag berücksichtigt werden. Hierbei werden die Voxel innerhalb einer Schicht nicht starr entlang eines orthogonalen Rasters ausgerichtet, sondern können zueinander versetzt gesetzt werden. Beispielsweise kann bei näherungsweise sphärischen Voxeln jede zweite Zeile um einen halben Voxeldurchmesser versetzt gesetzt werden. Hierdurch kann der Zeilenabstand im Vergleich zu einem orthogonalen Raster reduziert werden. Die Voxel werden dichter gesetzt und die Oberflächengüte steigt. Durch den Versatz der Voxel kann die Kantenschärfe abnehmen.

Zusätzlich oder alternativ zu einem versetzten Setzen der Voxel in der Ebene einer Materialschicht ist es möglich, die Voxel zweier benachbarter Ebenen zueinander versetzt anzuordnen.

Ist die Austragevorrichtung eingerichtet, Voxel verschiedener Größe zu setzen, so kann zusätzlich insbesondere im Bereich der Kanten des Objekts die Größe der gesetzten Druckmassen variiert werden, um eine höhere Kantenschärfe zu erreichen. Bevorzugt wird der Ort, an dem ein Voxel gesetzt wird, sowie dessen Größe so gewählt, dass die Kanten des Objekts möglichst exakt reproduziert werden. Beispielsweise werden im Bereich einer Kante anstelle eines einzelnen Voxels mehrere kleinere Voxel platziert. Die erzielbare Kantenschärfe und/oder Oberflächengüte wird dadurch erhöht.

Bei dem Verfahren ist vorgesehen, dass die Position des Druckkopfes durch eine Positionsmesseinrichtung laufend ermittelt wird. Dadurch kann die Relativposition des Druckkopfs zur Basisplatte und damit zum herzustellenden Objekt ermittelt werden. Bevorzugt erfolgt hierzu eine Bestimmung der Position für jede der drei Raumrichtungen X, Y und Z. Zumindest wird die Position für diejenigen Raumrichtungen bestimmt, die in einer Ebene parallel zur Basisplatte liegen.

Das laufende Ermitteln der Position des Druckkopfs ist beispielsweise vorteilhaft, falls die Herstellung des Objekts unterbrochen werden muss. Eine solche Unterbrechung kann beispielsweise erforderlich werden, um die verwendete Austragevorrichtung zur reinigen. Hierzu kann der Druckkopf in eine sichere, vom bereits teilweise aufgebauten Objekt entfernte Position gebracht und dort gereinigt werden. Etwaige Positionsänderungen des Druckkopfs bei der Reinigung, beispielsweise durch während der Reinigung auf den Druckkopf übertragene Kräfte, werden nach wie vor fortlaufend ermittelt und berücksichtigt, wenn der Druckvorgang wieder fortgesetzt wird. In einer bevorzugten Ausführungsform umfasst die 3D-Druckvorrichtung eine Reinigungsstation, welche eine automatische Reinigung ermöglicht. Die Reinigungsintervalle sind bevorzugt programmierbar, so dass sie abhängig von der verarbeiteten Druckmasse angepasst werden können. Die Reinigung dient der Qualitätssicherung, da nur bei einer sauberen Düse die angestrebte Voxel, bzw. Stranggeometrie sichergestellt ist.

Ein weiterer Grund für eine Unterbrechung kann das Auslösen einer Sicherheitsvorrichtung sein. Der Druckkopf ist ein bewegliches Teil und es besteht die Gefahr, dass ein Bediener der 3D-Druckvorrichtung verletzt wird, wenn er beispielsweise mit seinen Händen in die Nähe sich bewegender Teile gerät. Im Stand der Technik sind daher Not-Aus Schalter üblich, die die Stromzufuhr zu der verwendeten Positioniereinrichtung unterbrechen. Aufgrund der Trägheit des Druckkopfes oder aufgrund von äußerer Krafteinwirkung auf den Druckkopf kann sich dieser auch nach Abschalten der Stromzufuhr weiter bewegen, so dass seine tatsächliche Ist-Position von der zuletzt bekannten Soll-Position abweichen kann. Vorteilhafterweise ist vorgesehen, die Positionsmesseinrichtung weiter zu betreiben, so dass auch bei Auslösen eines Not-Aus Schalters die Position des Druckkopfes weiterhin fortlaufend ermittelt wird. Hierzu ist bevorzugt vorgesehen, dass die Stromversorgung für die Positionsmesseinrichtung von der der Positioniereinrichtung getrennt ist. Dies ermöglicht es, die Herstellung des Objekts nahtlos fortzusetzen, in dem der Druckkopf nach Wiederherstellen der Stromversorgung der Positioniereinrichtung wieder zurück an seine Soll-Position geführt wird. Vorteilhaft können dadurch insbesondere aufwendige oder teure 3D-Objekte, die sonst nach einem Not-Aus ausgeschossen würden, zu Ende gefertigt werden und bleiben erhalten.

Ein weiterer Vorteil der laufenden Ermittlung der tatsächlichen Position des Druckkopfs besteht darin, dass ein Nicht-Erreichen einer vorgegebenen Position erkannt werden kann. Hierbei wird eine vorgegebene Soll-Position als nicht erreicht angesehen, wenn die ermittelte Ist-Position des Druckkopfes um mehr als eine vorgegebene Toleranz abweicht. Diese kann beispielsweise fest vorgegeben werden, beispielsweise im Bereich von 0,1 bis 0,5 mm. Ebenfalls ist es denkbar, die Toleranz in Bezug auf die Größe eines Voxels oder eines Strangs vorzugeben, beispielsweise bezogen auf den Durchmesser eines näherungsweise sphärischen Voxels oder den Durchmesser eines Strangs. Beispielsweise kann eine Position dann als "nicht erreicht" gelten, wenn die gemessene Position in einem definierten Zeitraum zu keinem Zeitpunkt mit der Soll-Position im Toleranzbereich übereinstimmt. Nicht erreichte Positionen werden beispielsweise an die Steuereinrichtung zurückgemeldet, woraufhin die Information weiterverarbeitet, z. B. protokolliert und zur Steuerung des weiteren Druckvorgangs verwendet werden.

Bei dem Verfahren ist außerdem vorgesehen, dass die Druckmassen von der Austragevorrichtung in Abhängigkeit von der laufend ermittelten Position des Druckkopfes gesetzt werden. Der Austrag der Druckmasse durch die Austragevorrichtung erfolgt dabei jeweils unter Berücksichtigung der ermittelten Ist-Position und nicht aufgrund einer angenommenen Soll-Position.

Vorteilhaft wird die Kenntnis über die tatsächlichen Positionen der gesetzten Druckmassen gewonnen. Es wurde erkannt, dass zur Verbesserung der Qualität des zu druckenden Objekts die Kenntnis über die tatsächlichen Positionen der gesetzten Druckmassen hochrelevant ist. Mit dieser Kenntnis ist es möglich, das Volumen und die Größe der Voxel und/oder den Durchmesser der Stränge während des Drucks gezielt anzupassen. Im Rahmen der Erfindung ist es auch möglich, zur Verbesserung der Qualität die Verfahrstrategie, Aushärtestrategie und/oder z.B. den Voxelversatz in Abhängigkeit von den tatsächlichen Positionen der gesetzten Voxel und Stränge anzupassen. Es hat sich gezeigt, dass mit dem erfindungsgemäßen Verfahren hergestellte Objekte somit eine Qualität aufweisen können, die mit der von spritzgegossenen Objekten vergleichbar ist, oder diese übertrifft.

Die Kenntnis über die tatsächlichen Positionen der gesetzten Voxel und Stränge kann insbesondere bei der Bestimmung des Schemas berücksichtigt werden, anhand dessen der Austrag der Druckmasse erfolgt. Bevorzugt wird das Schema laufend gemäß der ermittelten Position des Druckkopfes aktualisiert. Weiterhin kann die Kenntnis über die tatsächlichen Positionen der gesetzten Voxel und Stränge bei dem Planen und Setzen von Stützmaterial berücksichtigt werden.

In einer bevorzugten Ausführungsform der Erfindung ist vorgesehen, dass fehlerhaft nicht-gesetzte Druckmassen ermittelt werden. Wird eine vorgegebene Position durch den Druckkopf nicht erreicht, so kann an der vorgegebenen Position nicht wie vorgesehen Druckmasse ausgetragen werden. Dies äußert sich im Objekt als fehlerhaft nicht-gesetzte Druckmasse. Wird eine fehlerhaft nicht-gesetzte Druckmasse erkannt, so wird dies bevorzugt zusammen mit der Position, an der die Druckmasse gesetzt werden sollte, protokolliert. Um die nicht-gesetzten Druckmassen nachzudrucken, wird der Druckkopf wieder an die protokollierte Position bewegt und der Austrag wird wiederholt.

In einer weiter bevorzugten Ausführungsform der Erfindung ist vorgesehen, dass fehlerhaft nicht-gesetzte Druckmassen ermittelt und vor Ihrer Aushärtung nachgedruckt werden. Das Nachdrucken nicht-gesetzter Druckmassen vor einem Aushärten hat den Vorteil, dass sich die noch nicht ausgehärteten Druckmassen noch nahtlos miteinander verbinden können. Die verwendete Druckmasse ist nach dem Austrag bevorzugt noch fließfähig, so dass die gesetzten Druckmassen ineinander fließen können und ein glatter Übergang zwischen den gesetzten Druckmassen entsteht.

Alternativ oder zusätzlich zum Nachdrucken der nicht-gesetzten Druckmassen ist vorgesehen, eine Fehlermeldung oder eine Warnmeldung auszugeben. Dies ist sinnvoll, da eine nicht erreichte Position auf Probleme mit der für die Positionierung des Druckkopfs verwendeten Positioniereinheit hinweisen kann.

In bevorzugten Ausführungsformen ist vorgesehen, die Funktion der Austragevorrichtung zu überwachen. Hierzu kann eine Sensoreinrichtung vorgesehen sein, die aus der Austragevorrichtung ausgetragene Druckmasse erkennt. Die Sensoreinrichtung kann bevorzugt berührungslos, z.B. optisch per Lichtschranke ausgestaltet sein. Eine an einer erreichten Position nicht ausgetragene Druckmasse kann auf Probleme mit der Austragevorrichtung hinweisen. Ein solches Problem kann beispielsweise eine verstopfte Düse oder eine Luftblase in der Zuführung der Druckmasse zum Druckkopf sein. Ist die 3D-Druckvorrichtung mit einer Reinigungsstation ausgerüstet, kann bei Erkennen einer verstopften Düse automatisch ein Reinigungsvorgang eingeleitet werden.

Bevorzugt ist vorgesehen, dass eine Aushärtung der Druckmassen mittels Strahlung oder Wärmeeinwirkung erfolgt, besonders bevorzugt ortsselektiv oder flächig mittels Strahlung oder Wärmeeinwirkung. Bevorzugt werden bei dem vorgeschlagenen Verfahren also Druckmassen eingesetzt, die sich nach dem Setzen durch Einwirkung von Strahlung oder Wärme aushärten lassen.

Unter ortsselektiver Belichtung wird verstanden, dass die Wärme- oder Strahlungsquelle relativ zur Basisplatte beweglich angeordnet ist und nur auf ausgewählte Bereiche des Objekts wirkt. Unter einer flächigen Belichtung wird verstanden, dass die Wärme- oder Strahlungsquelle auf das gesamte Objekt bzw. eine gesamte Materialschicht des Objekts auf einmal wirkt.

Beispielsweise wird bei dem vorgeschlagenen Verfahren eine Druckmasse eingesetzt, die sich durch Einwirkung von aktinischer Strahlung aushärten lässt, bevorzugt durch Einwirkung von UV/VIS-Strahlung. UV-Strahlung bzw. UV-Licht weist eine Wellenlänge im Bereich von 100 nm bis 380 nm auf, während sichtbares Licht (VIS-Strahlung) eine Wellenlänge im Bereich von 380 bis 780 nm aufweist. Bevorzugt erfolgt die Einwirkung der UV/VIS-Strahlung auf die Druckmasse durch eine Belichtungseinheit.

Im Fall von mittels Wärmeeinwirkung aushärtender Druckmassen kann eine Infrarotlicht-Quelle (IR) eingesetzt werden, um eine ortsselektive oder flächige Wärmebehandlung durchzuführen.

In dem erfindungsgemäßen Verfahren werden als Druckmasse besonders bevorzugt Silikonkautschukmassen verwendet, die durch UV/VIS-induzierte Additionsreaktion vernetzen. Gegenüber einer thermischen Vernetzung hat die UV/VIS-induzierte Vernetzung Vorteile. Zum einen können Intensität, Einwirkungszeit und Einwirkungsort der UV/VIS-Strahlung genau bemessen werden, während das Aufheizen der ausgetragenen Druckmasse (wie auch deren anschließendes Abkühlen) durch die relativ geringe thermische Leitfähigkeit stets verzögert erfolgt. Aufgrund des intrinsisch sehr hohen thermischen Ausdehnungskoeffizienten der Silikone führen die bei thermischer Vernetzung zwangsläufig vorhandenen Temperaturgradienten zu mechanischen Spannungen, welche die Maßhaltigkeit des gebildeten Objekts negativ beeinflussen, was im Extremfall zu inakzeptablen Formverzerrungen führen kann.

UV/VIS-induzierte additions-vernetzende Silikonkautschukmassen werden beispielsweise in DE 10 2008 000 156 A1, DE 10 2008 043 316 A1, DE 10 2009 002 231 A1, DE 10 2009 027 486 A1, DE 10 2010 043 149 A1 und WO 2009/027133 A2 beschrieben. Die Vernetzung kommt durch UV/VIS-induzierte Aktivierung eines lichtempfindlichen Hydrosilylierungskatalysators zustande, wobei Komplexe des Platins bevorzugt sind. In der Fachliteratur werden zahlreiche lichtempfindliche Platinkatalysatoren beschrieben, die unter Lichtausschluss weitgehend inaktiv sind und durch Bestrahlung mit Licht mit einer Wellenlänge von 250-500 nm in bei Raumtemperatur aktive Platin-Katalysatoren überführt werden können. Beispiele hierfür sind (η-Diolefin)(σ-aryl)-Platinkomplexe (EP 0 122 008 A1; EP 0 561 919 B1), Pt(II)-β-diketonatkomplexe (EP 0 398 701 B1) und (η5-Cyclopentadienyl)tri(σ-alkyl)Platin(IV)-Komplexe (EP 0 146 307 B1, EP 0 358 452 B1, EP 0 561 893 B1). Besonders bevorzugt sind MeCpPtMe₃ sowie die sich davon durch Substitution der am Platin befindlichen Gruppen ableitenden Komplexe wie beispielsweise beschrieben in EP 1 050 538 B1 und EP 1 803 728 B1. Die UV/VIS-induziert vernetzenden Druckmassen können ein- oder mehrkomponentig formuliert werden.

Die Geschwindigkeit der UV/VIS-induzierten Additionsvernetzung hängt von zahlreichen Faktoren ab, insbesondere von der Art und Konzentration des PlatinKatalysators, von der Intensität, Wellenlänge und Einwirkungszeit der UV/VIS-Strahlung, der Transparenz, Reflektivität, Schichtdicke und Zusammensetzung der Silikonkautschukmasse und der Temperatur.

Der Platin-Katalysator wird vorzugsweise in einer katalytisch ausreichenden Menge eingesetzt, so dass eine hinreichend schnelle Vernetzung bei Raumtemperatur ermöglicht wird. Vorzugsweise werden 0,1 bis 500 Gew.-ppm des Katalysators bezogen auf den Gehalt des Pt-Metalls zur gesamten Silikonkautschukmasse verwendet, vorzugsweise 0,5 bis 200 Gew.-ppm, besonders bevorzugt 1 bis 50 Gew.-ppm.

Für die Aushärtung der UV/VIS-induziert additions-vernetzenden Silikonkautschukmasse wird bevorzugt Licht der Wellenlänge 240 bis 500 nm, weiter bevorzugt 250 bis 400 nm, besonders bevorzugt 350 bis 400 nm, insbesondere bevorzugt 365 nm eingesetzt. Um eine rasche Vernetzung zu erzielen, worunter eine Vernetzungszeit bei Raumtemperatur von weniger als 20 min, vorzugsweise weniger als 10 min, besonders bevorzugt weniger als 1 min verstanden werden soll, empfiehlt sich die Verwendung einer UV/VIS-Strahlungsquelle mit einer Leistung zwischen 10 mW/cm² und 20.000 mW/cm², bevorzugt zwischen 30 mW/cm² und 15.000 mW/cm², sowie eine Strahlungsdosis zwischen 150 mJ/cm² und 20.000 mJ/cm², bevorzugt zwischen 500 mJ/cm² und 10.000 mJ/cm². Im Rahmen dieser Leistungs- und Dosis-Werte lassen sich flächenspezifische Bestrahlungszeiten zwischen maximal 2.000 s/cm² und minimal 8 ms/cm² realisieren.

Für das Durchführen der Aushärtung wird eine Aushärtestrategie verwendet. Bevorzugt erfolgt eine Aushärtung der Druckmassen nach dem Setzen einer Schicht von Druckmassen, nach dem Setzen mehrerer Schichten von Druckmassen oder direkt während des Drucks.

Ein Aushärten der Druckmassen direkt während des Drucks wird als *direkt-*Aushärtestrategie bezeichnet. Werden durch UV/VIS-Strahlung aushärtbare Druckmassen verwendet, so ist dann im Vergleich zu anderen Aushärtestrategien die UV/VIS-Quelle sehr lange aktiv, so dass mit sehr viel geringerer Intensität gearbeitet werden kann, was zu einem langsamen Durchvernetzen des Objekts führt. Dies begrenzt die Erwärmung des Objekts und führt zu maßhaltigen Objekten, da keine Ausdehnung des Objekts aufgrund von Temperaturspitzen auftritt.

Bei der *pro* layer-Aushärtestrategie erfolgt nach dem Setzen jeder vollständigen Materialschicht die strahlungsinduzierte Vernetzung der gesetzten Materialschicht. Während dieses Vorgangs verbindet sich die frisch gedruckte Schicht mit der ausgehärteten darunterliegenden gedruckten Schicht. Das Aushärten erfolgt nicht sofort nach dem Setzen einer Druckmasse, so dass die Druckmassen vor dem Aushärten Zeit haben um zu relaxieren. Hiermit ist gemeint, dass die Druckmassen ineinander fließen können, wodurch eine glattere Oberfläche als bei der *direkt*-Aushärtestrategie erzielt wird.

Bei der *n-te* layer-Aushärtestrategie wird ähnlich wie bei der *pro layer-*Aushärtestrategie verfahren, jedoch wird das Aushärten erst nach dem Setzen von n Materialschichten vorgenommen, wobei n eine natürliche Zahl ist. Die für das Relaxieren der Druckmassen zur Verfügung stehende Zeit wird weiter erhöht, wodurch sich die Oberflächengüte weiter verbessert. Aufgrund des Fließens der Druckmassen kann die erzielbare Kantenschärfe jedoch abnehmen.

In einer bevorzugten Ausführungsform wird die Aushärtestrategie mit dem Nachdrucken nicht-gesetzter Druckmassen abgestimmt. Beispielsweise kann jeweils nach dem Drucken einer Materialschicht das Nachdrucken der fehlerhaft nicht-gesetzten Druckmassen erfolgen, bevor die Vernetzung der gesetzten Materialschicht nach der *pro* layer-Aushärtestrategie bzw. *n-te layer-*Aushärtestrategie erfolgt.

Die Eigenschaften des herzustellenden Objekts lassen sich durch entsprechende Wahl der beim Setzen der Druckmassen verwendeten Parameter, insbesondere der Parameter der Austragevorrichtung, beeinflussen. Beispiele für beeinflussbare Eigenschaften des Objekts sind die Kantenschärfe, Oberflächengüte und Formstabilität. Die Eigenschaften des herzustellenden Objekts werden dabei durch die Konfiguration der Austragevorrichtung vor einem Druckbeginn bestimmt.

Einige Jetting-, bzw. Dispenser-Betriebsparameter können im Rahmen der Erfindung auch während des Drucks, z.B. jeweils nach einer oder mehreren Materialschichten oder sogar von Voxel zu Voxel, von Strang zu Strang, von Voxel zu Strang oder von Strang zu Voxel, variiert werden, insbesondere in Abhängigkeit der bekannten tatsächlichen Positionen der bereits gesetzten Voxel und Stränge, was eine Nachjustierung der Eigenschaften des herzustellenden Objekts ermöglicht.

Bevorzugt erfolgt im Falle von als Voxeln ausgebildeten Druckmassen eine Nachjustierung einer Kantenschärfe des Objekts durch Einstellen der Voxelgröße und/oder einer Oberflächengüte des Objekts durch Einstellen eines Voxelversatzes und/oder einer Formstabilität des Objekts durch Einstellen einer Verfahrstrategie der Austragevorrichtung. Die Voxelgröße kann wie hierin beschrieben durch die Konfiguration der Jetting-Parameter variiert werden.

Bevorzugt erfolgt im Falle von als Stränge ausgebildeten Druckmassen eine Nachjustierung einer Kantenschärfe und einer Oberflächengüte des Objekts durch Einstellen eines Volumenstroms und/oder einer Formstabilität durch Einstellen einer Verfahrstrategie der Austragevorrichtung. Der Volumenstrom kann wie hierin beschrieben durch die Konfiguration der Dispenser-Parameter variiert werden.

Unter Kantenschärfe wird verstanden, wie scharf die Abgrenzung von einem zum Objekt zugehörigen Bereich, an dem Druckmassen gesetzt werden sollen, zu einem außerhalb des Objekts liegenden Bereich ist, an dem keine Druckmassen gesetzt werden sollen. Je abrupter der Übergang ist, desto höher ist die Kantenschärfe. Typischerweise wird die Kantenschärfe besser, wenn die Größe der Voxel bzw. der Durchmesser der Stränge verringert wird. Umgekehrt sinkt die Kantenschärfe, wenn die Größe der Voxel bzw. der Durchmesser der Stränge erhöht wird. Des Weiteren kann unter Kantenschärfe auch der Radius einer Objektgrenze als Maß der Genauigkeit herangezogen werden.

Unter der Oberflächengüte wird verstanden, wie glatt eine Oberfläche ist. Eine Oberfläche hoher Güte ist vollständig geschlossen und glatt. Derartige Oberflächen werden im Idealfall z.B. durch Spritzguss erreicht.

Unter der Formstabilität wird verstanden, ob die geometrischen Abmessungen des Objekts maßhaltig sind, also keine oder nur geringe Abweichungen von den Abmessungen der Vorlage aufweisen.

Zusätzlich oder alternativ zu dem Aktualisieren des Schemas in Abhängigkeit der ermittelten Position des Druckkopfes können die Position des Druckkopfs und/oder der Basisplatte, auf welcher das Objekt angeordnet wird, in Abhängigkeit von der laufend ermittelten Position des Druckkopfes zur Einnahme einer exakten Position nachjustiert werden. Hierzu wird eine zur Positionierung des Druckkopfs bzw. der Basisplatte verwendete Positioniereinrichtung so angesteuert, dass die fortlaufend gemessene Position des Druckkopfs, also die Ist-Position, einer vorgegebenen Soll-Position fortlaufend nachgeführt wird. Hierzu kann eine Regelung verwendet werden, mit der die Positioniereinrichtung so angesteuert wird, dass die Abweichung der Ist-Position von der Soll-Position minimiert wird.

Hierdurch ist es bei Verwendung von Schrittmotoren in der Positioniereinrichtung möglich, eventuell auftretende Schrittverluste zu erkennen und direkt auszugleichen. Ebenfalls ist es hierdurch möglich, auf den Einsatz von Schrittmotoren zu verzichten und einen anderen Elektromotor, beispielsweise einen Gleichstrommotor als Antrieb der Positioniereinrichtung einzusetzen. In beiden Fällen wird vorteilhafterweise eine präzise Positionierung des Druckkopfs gewährleistet.

Erfindungsgemäß wird zusätzlich zu der Position des Druckkopfes eine Momentangeschwindigkeit des Druckkopfes laufend ermittelt und die Druckmassen werden in Abhängigkeit von der laufend ermittelten Position des Druckkopfes und von der laufend ermittelten Momentangeschwindigkeit des Druckkopfes gesetzt. Im Fall von als Strängen ausgebildeten Druckmassen erfolgt dies bevorzugt durch ein Einstellen eines Volumenstroms.

Der Volumenstrom bezeichnet hierbei das ausgetragene Volumen der Druckmasse pro Zeiteinheit. Bei dem Setzen von Strängen bewegt sich der

Druckkopf mit der Austragevorrichtung während des Austragens des Strangs relativ zur Basisplatte bzw. dem Objekt. Die Form des gesetzten Strangs auf der Basisplatte bzw. dem Objekt ist von dem Volumenstrom und der Momentangeschwindigkeit des Druckkopfes abhängig, sowie vom Abstand zur Basisplatte, bzw. von der Eindringtiefe der Düse in die letzte Schicht. Somit ist es vorteilhaft, zum Setzen einer vorgegebenen Menge an Druckmasse den Volumenstrom auf die Momentangeschwindigkeit abzustimmen, damit die Form des gesetzten Strangs der gewünschten Form entspricht.

Im Fall von Voxeln kann es ebenfalls sinnvoll sein, die Momentangeschwindigkeit des Druckkopfes laufend zu ermitteln. Ein Voxel stellt einen Tropfen ausgetragener Druckmasse dar, der nach dem Austragen aus der Austragevorrichtung von dieser auf die Basisplatte bzw. das Objekt fällt. Dabei beschreibt der Tropfen eine Flugbahn, die von der Momentangeschwindigkeit des Druckkopfes abhängig ist. Von der Flugbahn wiederum hängt ab, an welchem Ort auf der Basisplatte bzw. des Objekts der Tropfen bzw. Voxel tatsächlich gesetzt wird. Somit ist es vorteilhaft, auch im Falle von als Voxeln ausgebildeten Druckmassen die Momentangeschwindigkeit zu berücksichtigen.

Bevorzugt findet das vorgeschlagene Verfahren Anwendung bei der Herstellung von Objekten, welche Elastomerteile, insbesondere Silikonelastomerteile sind. Für die Herstellung des Elastomerteils wird bevorzugt eine der zuvor vorgeschlagenen Druckmassen verwendet. Elastomere, insbesondere Silikonelastomere, stellen spezielle Anforderungen an das 3D-Druckverfahren, da diese Materialien im Gegensatz z.B. zu thermoplastischen Kunststoffen elastisch sind und sich während der Herstellung des Objekts verformen können. Zudem sind die unvernetzten Materialien bis zur ihrer Aushärtung fließfähig, so dass die während des 3D-Drucks gesetzten flüssig bis pastösen Druckmassen verfließen können. Insbesondere ist eine zuverlässige Dosierung kleinster Volumina dieser Materialien in der Austragevorrichtung schwierig, so dass ein verlässliches Setzen der Druckmassen nur mit dem vorgeschlagenen Verfahren garantiert werden kann. Werden außerdem fehlerhaft nicht-gesetzte Druckmassen nicht wie vorgeschlagen nachgedruckt, so entstehen Lücken im Objekt oder Fehler, die sich z.B. in Form von nicht vollständig geschlossenen, unebenen und/oder rauen Oberflächen oder eingeschlossenen Luft- oder Gasvolumina zeigen können.

Das mit dem vorgeschlagenen Verfahren hergestellte Elastomerteil zeichnet sich durch eine Qualität aus, die der Qualität von mittels Spritzguss hergestellten Elastomerteilen entsprechen kann, oder diese sogar übertrifft. Dabei kann die Oberfläche wie gewünscht angepasst werden. Die Oberfläche kann z. B. strukturiert, insbesondere regelmäßig strukturiert, oder glatt und/oder vollständig geschlossen ausgebildet werden. Im Vergleich zu vielen spritzgegossenen Objekten weisen erfindungsgemäß hergestellte Elastomerteile außerdem keine eingeschlossenen Luft- oder Gasbläschen auf. Somit können mechanisch beanspruchbare Objekte mit verlässlichen physikalischen Eigenschaften erzeugt werden, welche z. B. auch für medizinische Anwendungen geeignet sind. Beispielsweise können Elastizitäts- oder Glattheitseigenschaften oder bei optischen Linsen eine isotrope optische Transparenz gewährleistet werden. Des Weiteren zeichnet sich das Elastomerteil dadurch aus, dass dessen Geometrie nicht durch die bei Gussverfahren eingesetzten Formwerkzeuge beschränkt ist. Somit kann das Elastomerteil Hinterschnitte und/oder eingeschlossene Hohlräume aufweisen. Ebenso ist das Elastomerteil frei von Graten, die bei spritzgegossenen Teilen insbesondere an der Trennung der Formhälften und an dem Angusssystem auftreten.

Erfindungsgemäß wird weiterhin ein Computerprogramm gemäß Anspruch 14 vorgeschlagen. Bei dem Computerprogramm kann es sich beispielsweise um eine Applikation oder um ein Programmmodul zur Ansteuerung der 3D-Druckvorrichtung handeln. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD, Blu-ray Disc oder einem USB-Stick. Zusätzlich oder alternativ kann das Computerprogramm auf einer Computereinrichtung wie etwa auf einem Server zum Herunterladen bereitgestellt werden, z.B. über ein Datennetzwerk wie das Internet oder eine Kommunikationsverbindung wie etwa eine Telefonleitung oder eine drahtlose Verbindung.

Ein weiterer Aspekt der Erfindung ist es, eine 3D-Druckvorrichtung zur Herstellung eines Objekts im 3D-Druckverfahren gemäß Anspruch 9 bereitzustellen. Die 3D-Druckvorrichtung hat zumindest einen Druckkopf, der zumindest eine Austragevorrichtung aufweist, wobei die Austragevorrichtung eine Steuereinrichtung aufweist, um Druckmassen an Soll-Positionen zu setzen, um das Objekt generativ zu erzeugen. Die 3D-Druckvorrichtung weist außerdem eine Positionsmesseinrichtung auf, mittels welcher die Position des Druckkopfes laufend ermittelbar ist, wobei die Positionsmesseinrichtung mit der Steuereinrichtung der Austragevorrichtung verbunden ist, und wobei die Austragevorrichtung eingerichtet ist, die Druckmassen abhängig von der laufend ermittelten Position des Druckkopfes zu setzen.

Die 3D-Druckvorrichtung ist zur Ausführung eines der hierin beschriebenen Verfahren ausgeführt und/oder eingerichtet. Dementsprechend werden im Rahmen der Verfahren beschriebene Merkmale entsprechend für die 3D-Druckvorrichtung und umgekehrt die im Rahmen der 3D-Druckvorrichtung beschriebenen Merkmale entsprechend für die Verfahren offenbart.

Die Austragevorrichtung weist eine Steuereinrichtung auf. Mit der Steuereinrichtung wird das Setzen von Druckmassen durch die Austragevorrichtung in Abhängigkeit der ermittelten Position des Druckkopfes und der Momentangeschwindigkeit gesteuert. Zusätzlich kann die Steuereinrichtung auch weitere Eingangsgrößen, dazu heranziehen. Die Momentangeschwindigkeit kann dabei durch die Steuereinrichtung beispielsweise aus der fortlaufend ermittelten Position des Druckkopfes berechnet werden, indem zu zwei Zeitpunkten die Position des Druckkopfes ermittelt wird, die Differenz zwischen den ermittelten Positionen gebildet wird und durch die zwischen den beiden Zeitpunkten verstrichene Zeitspanne geteilt wird.

Die Steuereinrichtung kann beispielsweise einen Mikrokontroller umfassen, der mit der Positionsmesseinrichtung und der Austragevorrichtung in Verbindung steht. Die Steuereinrichtung kann als separate Einheit ausgeführt sein oder auch in Kombination mit einer Maschinensteuerung der 3D-Druckvorrichtung vorliegen. Die Maschinensteuerung kann ebenfalls einen Mikrokontroller umfassen, wobei dieser mit einer Positioniereinrichtung in Verbindung steht.

Die Positioniereinrichtung ist eingerichtet, den mindestens einen Druckkopf relativ zu einer Basisplatte zu positionieren, wobei die Relativposition zumindest entlang der drei Raumachsen X, Y und Z verstellbar ist, ggf. auch drehbar. Die Positioniereinrichtung umfasst mindestens einen Motor, wobei üblicherweise für jede verstellbare Raumachse zumindest ein separater Motor vorgesehen ist. Der Motor ist beispielsweise als Elektromotor, insbesondere als Schrittmotor ausgeführt.

Die Austragevorrichtung weist eine von der Steuereinrichtung angesteuerte Jettingdüse oder einen Dispenser auf. In einer Ausführungsform weist die 3D-Druckvorrichtung mehrere einem Druckkopf zugeordnete ausgestaltete Austragevorrichtungen auf, welche eingerichtet sind, Druckmassen in Abhängigkeit von der laufend ermittelten Position des Druckkopfes zu setzen. Dabei kann der Druckkopf mehrere verschiedene Austragevorrichtungen aufweisen, z.B. eine oder mehrere Jettingdüsen und einen oder mehrere Dispenser. Hierbei können beispielsweise über den oder die Dispenser schnell die Druckmassen im Inneren des Objekts gesetzt werden und mit der oder den Jettingdüsen in hoher Qualität die Oberfläche des Objekts hergestellt werden. Alternativ ist es denkbar, dass der Druckkopf mehrere gleichartige Austragevorrichtungen umfasst. Hierdurch können beispielsweise mehrere Objekte gleichzeitig generativ hergestellt werden oder es kann mit mehreren Austragevorrichtungen parallel an dem Aufbau eines einzelnen Objekts gearbeitet werden. In beiden Fällen wird die insgesamt erforderliche Druckdauer reduziert.

Im Fall einer Jettingdüse als Austragevorrichtung wird durch die Steuereinrichtung vorgegeben, wann die Jettingdüse einen Voxel austrägt. Des Weiteren kann vorgesehen sein, dass durch die Steuereinrichtung die Größe des Voxels vorgegeben wird.

Im Fall eines Dispensers als Austragevorrichtung wird durch die Steuereinrichtung vorgegeben, wann der Dispenser mit dem Austragen von Druckmasse in Form eines Strangs beginnt und wann das Austragen beendet wird. Des Weiteren kann vorgesehen sein, dass der Volumenstrom, also wieviel Druckmasse in welcher Zeit ausgetragen wird, durch die Steuereinrichtung vorgegeben wird.

Wird Stützmaterial eingesetzt, so kann der Druckkopf eine oder mehrere weitere Austragevorrichtungen für das Stützmaterial aufweisen. Alternativ oder zusätzlich kann für das Austragen von Stützmaterial auch ein weiterer Druckkopf mit einer entsprechenden Austragevorrichtung vorgesehen sein.

Die Positionsmesseinrichtung ist eingerichtet, die Position des mindestens einen Druckkopfs laufend zu bestimmen. Hierzu kann vorgesehen sein, dass die Positionsmesseinrichtung mit einer vorgegebenen Rate Messungen der Position des Druckkopfs vornimmt und an die Steuereinrichtung übermittelt.

Die Positionsmesseinrichtung ist bevorzugt eingerichtet, zu jeder durch die Positioniereinrichtung verstellbaren Achse oder Raumrichtung eine Messung der Position mit Bezug zu dieser Achse oder Raumrichtung vorzunehmen.

Zumindest ist die Positionsmesseinrichtung eingerichtet, die Position des Druckkopfes innerhalb einer Ebene parallel zu der Basisplatte zu bestimmen. Bevorzugt ist sie eingerichtet, die Position des Druckkopfes im Raum zu bestimmen.

Die Positionsmesseinrichtung weist bevorzugt zumindest einen Schrittzähler am Motor, Drehgeber (Encoder), optischen Maßstab, insbesondere einen Glasmaßstab, GPS-Sensor, Radarsensor, Ultraschallsensor, LIDAR-Sensor und/oder zumindest eine Lichtschranke auf. Der Schrittzähler am Motor kann insbesondere als berührungsloser Schalter, beispielsweise als Magnetsensor, insbesondere Hallsensor ausgestaltet sein.

Die 3D-Druckvorrichtung weist bevorzugt zusätzlich ein Hauptsteuergerät auf, welches eine Vorlage bzw. ein Computermodell des zu druckenden Objekts enthält, wobei das Hauptsteuergerät und die Steuereinrichtung der Austragevorrichtung für eine bidirektionale Kommunikation miteinander eingerichtet sind.

Das Hauptsteuergerät kann beispielsweise als ein Computer ausgeführt sein, welcher mit der Steuereinrichtung beispielsweise über ein Datennetzwerk wie z. B. Ethernet oder WLAN oder über eine Verbindung wie z. B. eine serielle Verbindung oder USB kommuniziert.

Auf dem Hauptsteuergerät kann das Computermodell in einem beliebigen Dateiformat hinterlegt sein. Übliche Dateiformate umfassen z.B. STL, OBJ, CLI/SLC, PLY, VRML, AMF, STEP, IGES. Bei der Durchführung des beschriebenen Verfahrens werden durch das Hauptsteuergerät virtuelle horizontale Schnitte durch das Modell erzeugt (sog. *slicen*)*.* Aus diesen horizontalen Schnitten wird im Anschluss ein Schema berechnet, welches angibt, wie die Druckmassen zum generativen Aufbauen des Objekts platziert werden müssen. Hierbei wird berücksichtigt, ob der Austrag der Druckmassen in Form von Voxeln, in Form von Strängen oder in Form einer Kombination aus Voxeln und Strängen erfolgt. Erfordert die Form des Objekts das Setzen von Stützmaterial, so ist das Hauptsteuergerät bevorzugt eingerichtet, auch ein Schema zum Setzen des Stützmaterials zu erzeugen. Das Berechnen und Setzen von Stützmaterial kann auch entkoppelt erfolgen.

Während der Herstellung des Objekts kommunizieren das Hauptsteuergerät und die Steuereinrichtung miteinander, so dass das Hauptsteuergerät in Abhängigkeit der ermittelten Position des Druckkopfs und gegebenenfalls weiterer ermittelter Parameter das Schema aktualisieren kann. Ebenfalls kann das Hauptsteuergerät Meldungen über auftretende Fehler und/oder über fehlerhaft nicht-gesetzte Druckmassen erhalten, die entsprechend berücksichtigt werden können.

Durch die direkte Rückmeldung der Position des Druckkopfes an das Hauptsteuergerät ist es möglich, dass das Hauptsteuergerät direkten Einfluss auf die Verfahrwege des Druckkopfes nehmen kann. So ist es beispielsweise möglich, den Druckkopf außerhalb des Objekts zu beschleunigen und abzubremsen, so dass sich der Druckkopf während des eigentlichen Druckvorganges, bei dem Druckmassen gesetzt werden, mit konstanter Geschwindigkeit relativ zum Objekt bewegt. Insbesondere bei hohen Geschwindigkeiten können so Resonanzen sowie Schwingungen vermieden bzw. reduziert werden, was zu einer höheren Qualität des Objekts führt. Die Beschleunigung außerhalb des Objekts führt zu kürzeren Totzeiten bei Leerfahrten, was die für den Druck benötigte Zeit reduziert und damit wiederrum die Druckkosten pro Objekt senkt.

Werden Druckmassen eingesetzt, die unter UV/VIS-Einwirkung aushärten, so weist die 3D-Druckvorrichtung bevorzugt eine UV/VIS-Quelle auf. Bei ortsselektiver Belichtung ist die UV/VIS-Quelle relativ zur Basisplatte beweglich angeordnet und beleuchtet nur ausgewählte Bereiche des Objekts. Bei einer flächigen Belichtung ist die UV/VIS-Quelle in einer Variante derart ausgestaltet, dass das gesamte Objekt bzw. eine gesamte Materialschicht des Objekts auf einmal belichtet wird. In einer bevorzugten Variante ist die UV/VIS-Quelle derart ausgebildet, ihre Lichtstärke oder ihre Energie variabel eingestellt werden kann und dass die UV/VIS-Quelle zur gleichen Zeit nur einen Teilbereich des Objekts belichtet, wobei die UV/VIS-Quelle derart relativ zu dem Objekt bewegt werden kann, dass das gesamte Objekt mit dem UV/VIS-Licht, ggf. in unterschiedlicher Intensität, belichtet werden kann. Beispielsweise ist die UV/VIS-Quelle hierzu als UV/VIS-LED Leiste ausgestaltet und wird relativ zu dem Objekt, bzw. über das gedruckte Objekt bewegt.

Bevorzugt umfasst die 3D-Druckvorrichtung eine Reinigungsstation, welche eine automatische Reinigung der Austragevorrichtung des mindestens einen Druckkopfs ermöglicht. Aufgrund der laufenden Ermittlung der Position des Druckkopfes kann eine Reinigung auch während der Herstellung eines Objekts vorgenommen werden. Dazu wird der Druck unterbrochen und der Druckkopf zur Reinigungsstation bewegt. Nach Durchführung des Reinigungsvorgangs wird der Druckkopf präzise zur nächsten Position geführt, an der eine Druckmasse gesetzt werden soll und der Druckvorgang wird fortgesetzt.

### Kurzbeschreibung der Figuren

In den Figuren sind Beispiele welche nicht erfindungsgemäß sind, dargestellt.

Es zeigen
- Figur 1: eine schematische Darstellung eines Verfahrens,
- Figur 2: einen schematischer Aufbau einer 3D-Druckvorrichtung,
- Figur 3: verschiedene Verfahrstrategien und
- Figur 4: verschiedene Möglichkeiten zum Setzen von Voxeln.

### Detaillierte Beschreibung der Figuren

In der nachfolgenden Beschreibung werden gleiche oder ähnliche Komponenten und Elemente mit gleichen oder ähnlichen Bezugszeichen bezeichnet, wobei auf eine wiederholte Beschreibung dieser Komponenten oder Elemente in Einzelfällen verzichtet wird,

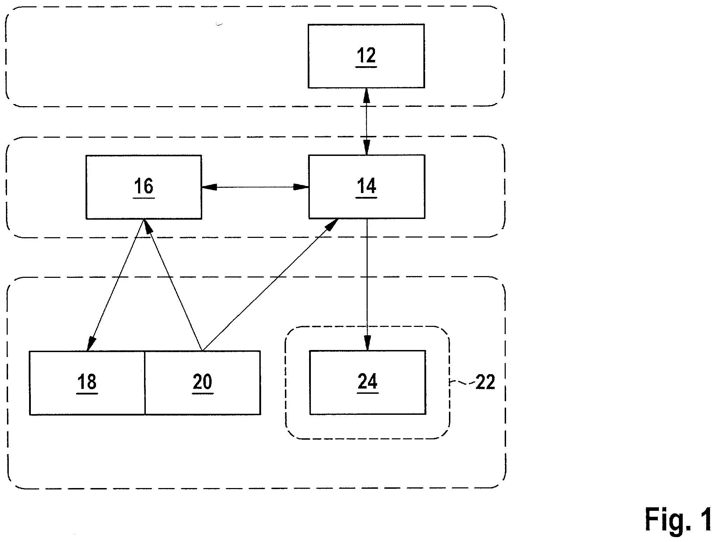

In Figur 1 ist der Ablauf eines Verfahrens schematisch dargestellt. Eine Vorlage für ein herzustellendes Objekt ist in dem Hauptsteuergerät 12 hinterlegt. Das Hauptsteuergerät 12 ermittelt hieraus ein Schema, welches beschreibt, an welchen Orten Druckmassen zur Herstellung des Objekts gesetzt werden müssen. Diese Orte stellen Soll-Positionen dar. Diese Soll-Positionen werden an eine Steuereinrichtung 14 übermittelt. Die Steuereinrichtung 14 steht mit einer Maschinensteuerung 16 in Verbindung. Mittels der Maschinensteuerung 16 wird eine Positioniereinrichtung 18 angesteuert, um einen Druckkopf 22 zu der Soll-Position zu bewegen. Alternativ kann die Maschinensteuerung 16 eine direkte Verbindung mit dem Hauptsteuergerät 12 aufweisen (nicht dargestellt).

Die Bewegung des Druckkopfs 22 wird über eine Positionsmesseinrichtung 20 überwacht. Die Positionsmesseinrichtung 20 und die Positioniereinrichtung 18 bzw. der Druckkopf 22 sind derart miteinander gekoppelt, insbesondere durch eine mechanische Verbindung, dass jede Positionsänderung des Druckkopfs 22 durch die Positionsmesseinrichtung 20 ermittelt wird. Die Positionsmesseinrichtung 20 meldet die ermittelte.Position des Druckkopfs 22 zurück an die Steuereinrichtung 14.

Der Druckkopf 22 umfasst zumindest eine Austragevorrichtung 24, die eingerichtet ist, Druckmassen zum Aufbau des Objekts zu setzen. Die Steuereinrichtung 14 steht mit der Austragevorrichtung 24 in Verbindung und steuert den Austrag der Druckmassen. Dabei ist vorgesehen, dass die Steuereinrichtung 14 die Austragevorrichtung 24 in Abhängigkeit von der über die Positionsmesseinrichtung 20 laufend ermittelten Position des Druckkopfs 22 ansteuert. Somit werden Druckmassen unter Berücksichtigung der tatsächlich ermittelten Ist-Position gesetzt und nicht etwa unter der Annahme, dass sich der Druckkopf 22 an der Soll-Position befindet.

Außerdem kann vorgesehen sein, dass ermittelte Positionen des Druckkopfs 22 durch die Steuereinrichtung 14 über eine bidirektionale Verbindung an die Hauptsteuerung 12 zurückgemeldet werden. Die Hauptsteuerung 12 wird dadurch in die Lage versetzt, das weitere Setzen der Druckmassen in Abhängigkeit der ermittelten Positionen zu planen, an denen bereits Druckmassen gesetzt wurden.

Ferner kann wie dargestellt vorgesehen sein, dass die Positionsmesseinrichtung 20 die laufend ermittelte Position des Druckkopfs 22 zusätzlich an die Maschinensteuerung 16 übermittelt. Diese kann durch diese Rückmeldung in einer Variante des Verfahrens eine Fehlermeldung generieren und an die Steuereinrichtung 14 übermitteln, falls eine Soll-Position durch den Druckkopf 22 nicht erreicht werden konnte. Ebenfalls ist es möglich, einen Regelkreis zu implementieren, um die Positioniereinrichtung 18 derart anzusteuern, dass die Abweichung der von der Positionsmesseinrichtung 20 ermittelten Position des Druckkopfs 22 von der Soll-Position minimiert wird. Hierzu kann die Ist-Position des Druckkopfs 22 über die Positioniereinrichtung 18 laufend der Soll-Position nachgeführt werden, was im Rahmen der vorliegenden Offenbarung auch als Nachjustierung zur Einnahme einer *exakten* Position bezeichnet wird.

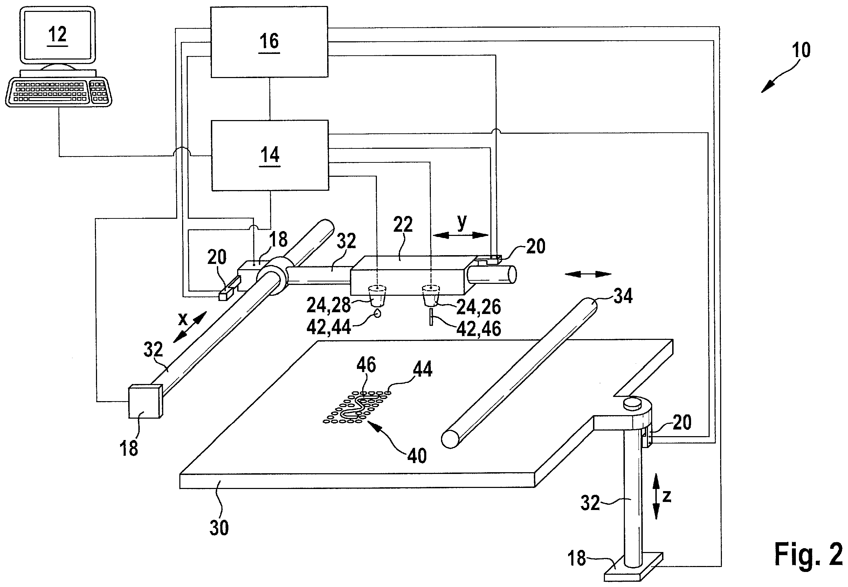

In Figur 2 ist eine 3D-Druckvorrichtung 10 schematisch dargestellt. Die 3D-Druckvorrichtung 10 umfasst die Hauptsteuerung 12, die die Vorlage für ein herzustellendes Objekt 40 enthält und mit der Steuereinrichtung 14 in Verbindung steht. Die 3D-Druckvorrichtung 10 umfasst ferner eine Basisplatte 30, auf der das Objekt 40 generativ durch das Setzen von Druckmassen 42 aufgebaut wird.

Zum Setzen der Druckmassen 42 umfasst der Druckkopf 22 in dem dargestellten Ausführungsbeispiel zwei Austragevorrichtungen 24. Eine Austragevorrichtung 24 ist als Jettingdüse 28 ausgeführt. Die Jettingdüse 28 setzt die Druckmassen 42 in Form von einzelnen Tropfen oder Voxeln 44. Die andere Austragevorrichtung 24 ist als Dispenser 26 ausgestaltet und setzt die Druckmassen 42 in Form von Strängen 46.

In dem in der Figur 2 dargestellten Beispiel werden sowohl die Jettingdüse 28 als auch der Dispenser 26 zum generativen Aufbau des Objekts 40 eingesetzt, wobei mit Hilfe der Jettingdüse 28 Voxel 44 gesetzt werden, die die Oberfläche des Objekts 40 bilden und mit dem Dispenser 26 Stränge 46 gesetzt werden, um rasch das Innere des Objekts 40 aufzufüllen.

Wird Druckmasse 42 eingesetzt, die durch Einwirkung von UV/VIS-Strahlung aushärtet, so ist bevorzugt eine UV/VIS-Lichtquelle vorgesehen. In der Ausführungsform der Figur 2 ist hierzu eine LED-Leiste 34 vorgesehen, die UV/VIS-Licht ortsselektiv emittiert. Um die Fläche der Basisplatte 30 mit UV/VIS-Licht überstreichen zu können, ist die LED-Leiste 34 beweglich ausgeführt. Bei wärmeaushärtenden Druckmassen 42, wird alternativ bevorzugt eine IR-Lichtquelle vorgesehen, die eingerichtet ist, ortselektiv die Druckmassen 42 zu erwärmen. Dazu kann die IR-Lichtquelle insbesondere am Druckkopf 22 befestigt werden. Alternativ kann zur Aushärtung ein beheizbarer Raum eingesetzt werden.

Zur Positionierung des Druckkopfs 22, also relativ zur Basisplatte 30, umfasst die 3D-Druckvorrichtung 10 ferner drei Positioniereinrichtungen 18, wobei jede dieser Positioniereinrichtungen 18 eine Bewegung in jeweils eine der drei Raumachsen X, Y und Z ermöglicht. Jede der Positioniereinrichtungen 18 ist hierzu mit einer Achse 32 verbunden, entlang der eine Bewegung ermöglicht wird. Im in der Figur 2 dargestellten Ausführungsbeispiel ist hierzu eine der Positioniereinrichtungen 18 der Basisplatte 30 zugeordnet und ermöglicht eine Verschiebung der Basisplatte 30 entlang der mit "Z" bezeichneten Raumrichtung. Zwei weitere Positioniereinrichtungen 18 sind dem Druckkopf 22 zugeordnet und ermöglichen dem Druckkopf 22 Bewegungen entlang den mit "X" und "Y" bezeichneten Raumrichtungen. Alle drei Positioniereinrichtungen 18 zusammen ermöglichen es, den Druckkopf 22 entlang jeder der drei Raumrichtungen relativ zu der Basisplatte 30 zu positionieren. Die Positioniereinrichtungen 18 werden von der Maschinensteuerung 16 angesteuert, die wiederum mit der Steuereinrichtung 14 kommuniziert.

Zum Ermitteln der Position des Druckkopfs 22 umfasst die 3D-Druckvorrichtung 10 drei Positionsmesseinrichtungen 20. Die Positionsmesseinrichtungen 20 sind jeweils einer der drei Raumrichtungen X, Y und Z zugeordnet und erfassen die Bewegung des Druckkopfs 22 bzw. der Basisplatte 30, so dass die relative Position des Druckkopfes 22 zur Basisplatte 30 laufend ermittelt wird. Die Positionsmesseinrichtungen 20 stehen mit der Steuereinrichtung 14 in Verbindung. Zusätzlich kann eine Verbindung zu der Maschinensteuerung 16 vorgesehen sein.

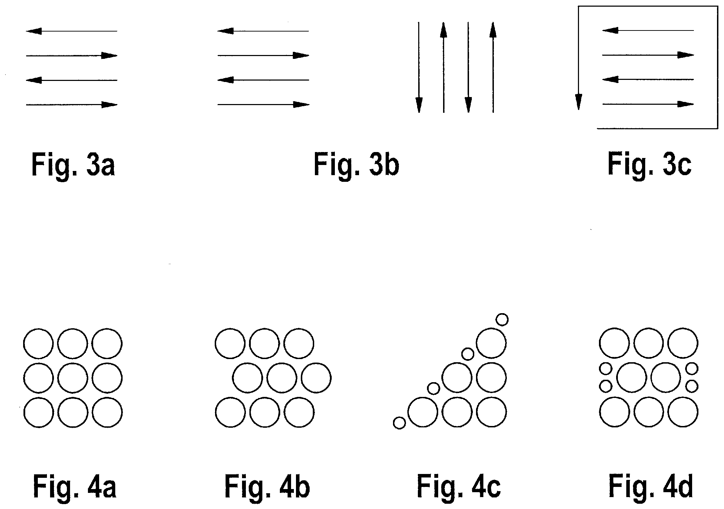

In Figur 3 sind verschiedene Verfahrstrategien dargestellt, die im Rahmen der Erfindung angewendet werden können.

Bei der Dual-Verfahrstrategie Figur 3 a) wird der mindestens eine Druckkopf entlang einer gewählten Hauptdruckrichtung in Bezug auf die Basisplatte zeilenweise hin und her bewegt. Nach jeder Zeile wird der Druckkopf senkrecht zur Druckrichtung um eine Zeilenbreite weiter bewegt. Der Prozess ähnelt dabei dem Druck eines herkömmlichen Tintenstrahldruckers.

Die Xing-Verfahrstrategie Figur 3 b) entspricht weitestgehend der Dual-Verfahrstrategie. Im Gegensatz zur Dual-Verfahrstrategie wird nach jeder oder nach jeder n-ten Materialschicht (wobei n eine natürliche Zahl ist) die Hauptdruckrichtung um 90° gedreht.

Bei der Border-Verfahrstrategie Figur 3 c) wird zuerst für jede Materialschicht zuerst die äußere Umrandung des Objekts hergestellt und im Anschluss die eingeschlossene Fläche mittels der Dual-Verfahrstrategie aufgefüllt.

Die genannten Verfahrstrategien stellen Grundmuster dar, die im Rahmen desselben Objekts kombiniert und variiert werden können, wenn es zweckmäßig erscheint. Auch Mischformen verschiedener Verfahrstrategien sind möglich.

Figur 4 zeigt verschiedene Möglichkeiten zum Setzen von als Voxel ausgebildeten Druckmassen 42, die im Rahmen der Erfindung angewendet werden können.

Bei der ersten Variante Figur 4 a) werden Voxel gemäß einem Druckraster gesetzt.

Bei der zweiten Variante Figur 4 b) werden Voxel zeilenweise zueinander versetzt gesetzt.

Bei der dritten Variante Figur 4 c) werden Voxel verschiedener Größe gesetzt.

Bei der vierten Variante Figur 4 d) werden Voxel verschiedener Größe versetzt zueinander gesetzt.

## Patentansprüche

1. Verfahren zur Herstellung eines Objekts (40) unter Einsatz einer 3D-Druckvorrichtung (10), die zumindest einen Druckkopf (22) mit zumindest einer Austragevorrichtung (24) aufweist,
wobei die Austragevorrichtung (24) dazu eingerichtet ist, Druckmassen (42) an Soll-Positionen zu setzen, um das Objekt (40) generativ zu erzeugen,
**dadurch gekennzeichnet, dass** die Position des Druckkopfes (22) sowie die Momentangeschwindigkeit des Druckkopfes (22) durch eine Positionsmesseinrichtung (20) laufend ermittelt wird,
und die Druckmassen (42) von der Austragevorrichtung (24) in Abhängigkeit von der laufend ermittelten Position des Druckkopfes (22) und von der laufend ermittelten Momentangeschwindigkeit des Druckkopfes (22) gesetzt werden.

2. Verfahren nach einem der vorhergehenden Ansprüche, **dadurch gekennzeichnet, dass** fehlerhaft nicht-gesetzte Druckmassen (42) ermittelt und vor Ihrer Aushärtung nachgedruckt werden.

3. Verfahren nach einem der vorhergehenden Ansprüche, **dadurch gekennzeichnet, dass** eine Aushärtung der Druckmassen (42) ortsselektiv oder flächig mittels Strahlung oder Wärmeeinwirkung erfolgt.

4. Verfahren nach einem der vorhergehenden Ansprüche, **dadurch gekennzeichnet, dass** eine Aushärtung der Druckmassen (42) nach dem Setzen einer Schicht von Druckmassen (42), nach dem Setzen mehrerer Schichten von Druckmassen (42) oder direkt während des Druckes erfolgt.

5. Verfahren nach einem der vorhergehenden Ansprüche, **dadurch gekennzeichnet, dass**
im Falle von als Voxel (44) ausgebildeten Druckmassen (42) eine Nachjustierung
a) einer Kantenschärfe des Objekts (40) durch Einstellen der Voxelgröße und/oder
b) einer Oberflächengüte des Objekts (40) durch Einstellen eines Voxelversatzes und/oder
c) einer Formstabilität des Objekts (40) durch Einstellen einer Verfahrstrategie der Austragevorrichtung (24)
erfolgt und im Falle von als Stränge (46) ausgebildeten Druckmassen (42) eine Nachjustierung
d) einer Kantenschärfe und einer Oberflächengüte des Objekts (40) durch Einstellen eines Volumenstroms und/oder
e) einer Formstabilität des Objekts (40) durch Einstellen einer Verfahrstrategie der Austragevorrichtung
erfolgt.

6. Verfahren nach einem der vorhergehenden Ansprüche, **dadurch gekennzeichnet, dass** eine Position des Druckkopfs (22) und/oder einer Basisplatte (30), auf welcher das Objekt (40) angeordnet wird, in Abhängigkeit von der laufend ermittelten Position des Druckkopfes (22) zur Einnahme einer exakten Position nachjustiert werden.

7. Verfahren nach einem der vorhergehenden Ansprüche, **dadurch gekennzeichnet, dass** im Falle von als Stränge (46) ausgebildeten Druckmassen (42) das Setzen der Druckmassen (42) in Abhängigkeit von der laufend ermittelten Momentangeschwindigkeit des Druckkopfes (22) durch Einstellen eines Volumenstroms erfolgt.

8. Verfahren nach einem der vorhergehenden Ansprüche, **dadurch gekennzeichnet, dass** das Objekt (40) ein Elastomerteil, insbesondere ein Silikonelastomerteil ist.

9. 3D-Druckvorrichtung (10) zur Herstellung eines Objekts (40) im 3D-Druckverfahren, mit zumindest einem Druckkopf (22), der zumindest eine Austragevorrichtung (24) aufweist,
wobei die Austragevorrichtung (24) eine Steuereinrichtung (14) aufweist, um Druckmassen (42) an Soll-Positionen zu setzen, um das Objekt (40) generativ zu erzeugen,
wobei die 3D-Druckvorrichtung eine Positionsmesseinrichtung (20) aufweist, mittels welcher die Position des Druckkopfes (22) laufend ermittelbar ist,
wobei Positionsmesseinrichtung (20) mit der Steuereinrichtung (14) der Austragevorrichtung (24) verbunden ist,
und wobei die Austragevorrichtung (24) eingerichtet ist, die Druckmassen (42) in Abhängigkeit von der laufend ermittelten Position des Druckkopfes (22) und von der laufend ermittelten Momentangeschwindigkeit des Druckkopfes (22) zu setzen.

10. 3D-Druckvorrichtung (10) nach Anspruch 9, **dadurch gekennzeichnet, dass** die Austragevorrichtung (24) zumindest eine von der Steuereinrichtung (14) angesteuerte Jettingdüse (28) und/oder einen Dispenser (26) aufweist.

11. 3D-Druckvorrichtung (10) nach Anspruch 9 oder 10, **dadurch gekennzeichnet, dass** die Positionsmesseinrichtung (20) zumindest einen Schrittzähler am Motor, Drehgeber, optischen Maßstab, insbesondere Glasmaßstab, GPS-Sensor, Radarsensor, Ultraschallsensor, LIDAR-Sensor und/oder zumindest eine Lichtschranke aufweist.

12. 3D-Druckvorrichtung (10) nach einem der Ansprüche 9 bis 11 **dadurch gekennzeichnet, dass** die 3D-Druckvorrichtung (10) ein Hauptsteuergerät (12) aufweist, welches eine Vorlage des zu druckenden Objekts (40) enthält, wobei das Hauptsteuergerät (12) und die Steuereinrichtung (14) der Austragevorrichtung (24) für eine bidirektionale Kommunikation miteinander eingerichtet sind.

13. 3D-Druckvorrichtung (10) nach einem der Ansprüche 9 bis 12, **dadurch gekennzeichnet, dass** die 3D-Druckvorrichtung (10) mehrere einem Druckkopf (22) zugeordnete Austragevorrichtungen (24) aufweist, welche eingerichtet sind, Druckmassen (42) in Abhängigkeit von der laufend ermittelten Position des Druckkopfes (22) und von der laufend ermittelten Momentangeschwindigkeit des Druckkopfes (22) zu setzen

14. Computerprogramm zur Durchführung des Verfahrens nach einem der Ansprüche 1 bis 8, wobei das Computerprogramm auf einer 3D-Druckvorrichtung (10) nach einem der Ansprüche 9-13 ausgeführt wird.

## Claims

1. Method of producing an object (40) using a 3D printing device (10) having at least one printhead (22) having at least one discharge device (24),
wherein the discharge device (24) is set up to place print materials (42) at target positions in order to generatively manufacture the object (40),
**characterized in that** the position of the printhead (22) and the instantaneous speed of the printhead (22) are constantly determined by a position measurement unit (20),
and the print materials (42) are placed by the discharge device (24) depending on the constantly determined position of the printhead (22) and the constantly determined instantaneous speed of the printhead (22).

2. Method according to any of the preceding claims, **characterized in that** erroneously unplaced print materials (42) are detected and reprinted before they are cured.

3. Method according to any of the preceding claims, **characterized in that** the print materials (42) are cured in a location-selective manner or over a full area by means of radiation or by thermal means.

4. Method according to any of the preceding claims, **characterized in that** curing of the print materials (42) is effected after the placing of a layer of print materials (42), after the placing of multiple layers of print materials (42) or directly during the printing.

5. Method according to any of the preceding claims, **characterized in that**
in the case of print materials (42) in the form of voxels (44)
a) an edge sharpness of the object (40) is readjusted by adjusting the voxel size and/or
b) a surface quality of the object (40) is readjusted by adjusting a voxel offset and/or
c) a dimensional stability of the object (40) is readjusted by adjusting a movement strategy of the discharge device (24)
and in the case of print materials (42) in the form of strands (46)
d) an edge sharpness and a surface quality of the object (40) is readjusted by adjusting a volume flow rate and/or
e) a dimensional stability of the object (40) is readjusted by adjusting a movement strategy of the discharge device.

6. Method according to any of the preceding claims, **characterized in that** a position of the printhead (22) and/or of a baseplate (30) on which the object (40) is disposed is readjusted depending on the constantly determined position of the printhead (22) to take up an exact position.

7. Method according to any of the preceding claims, **characterized in that**, in the case of print materials (42) in the form of strands (46), the print materials (42) are placed depending on the constantly determined instantaneous speed of the printhead (22) by adjustment of a volume flow rate.

8. Method according to any of the preceding claims, **characterized in that** the object (40) is an elastomer part, especially a silicone elastomer part.

9. 3D printing device (10) for production of an object (40) by a 3D printing method, having at least one printhead (22) having at least one discharge device (24), wherein the discharge device (24) has a control unit (14) in order to place print materials (42) at target positions in order to generatively manufacture the object (40),
wherein the 3D printing device has a position measurement unit (20) by means of which the position of the printhead (22) can be determined constantly,
wherein position measurement unit (20) is connected to the control unit (14) of the discharge device (24),
and wherein the discharge device (24) is set up to place the print materials (42) as a function of the constantly determined position of the printhead (22) and of the constantly determined instantaneous speed of the printhead (22).

10. 3D printing device (10) according to Claim 9, **characterized in that** the discharge device (24) has at least one jetting nozzle (28) actuated by the control unit (14) and/or a dispenser (26).

11. 3D printing device (10) according to Claim 9 or 10, **characterized in that** the position measurement unit (20) includes at least one step counter on the motor, rotary encoder, optical scale, especially glass scale, GPS sensor, radar sensor, ultrasound sensor, LIDAR sensor and/or at least one light barrier.

12. 3D printing device (10) according to any of Claims 9 to 11, **characterized in that** the 3D printing device (10) has a main controller (12) containing a template of the object (40) to be printed, where the main controller (12) and the control unit (14) of the discharge device (24) are set up for bidirectional communication with one another.

13. 3D printing device (10) according to any of Claims 9 to 12, **characterized in that** the 3D printing device (10) has multiple discharge devices (24) assigned to a printhead (22), which are set up to place print materials (42) depending on the constantly determined position of the printhead (22) and on the constantly determined instantaneous speed of the printhead (22).

14. Computer program for performance of the method according to any of Claims 1 to 8, wherein the computer program is executed on a 3D printing device (10) according to any of Claims 9-13.

## Revendications

1. Procédé de fabrication d'un objet (40) à l'aide d'un dispositif d'impression 3D (10) qui comporte au moins une tête d'impression (22) pourvue d'au moins un dispositif de décharge (24),
le dispositif de décharge (24) étant adapté pour placer des pâtes de matière d'impression (42) à des positions cibles afin de générer l'objet (40) de manière générative,
**caractérisé en ce que**
la position de la tête d'impression (22) et la vitesse instantanée de la tête d'impression (22) sont déterminées en continu par un moyen de mesure de position (20),
et les pâtes de matière d'impression (42) sont placées par le dispositif de décharge (24) en fonction de la position, déterminée en continu, de la tête d'impression (22) et de la vitesse instantanée, déterminée en continu, de la tête d'impression (22).

2. Procédé selon l'une des revendications précédentes, **caractérisé en ce que** des pâtes de matière d'impression (42), qui n'ont pas été placées incorrectement, sont déterminées et réimprimées avant d'être durcies.

3. Procédé selon l'une des revendications précédentes, **caractérisé en ce que** le durcissement des pâtes de matière d'impression (42) est effectué de manière localement sélective ou de manière sensiblement bidimensionnelle par rayonnement ou par action de la chaleur.

4. Procédé selon l'une des revendications précédentes, **caractérisé en ce que** le durcissement des pâtes de matière d'impression (42) est effectué après le placement d'une couche de pâtes de matière d'impression (42), après le placement de plusieurs couches de pâtes de matière d'impression (42) ou directement pendant l'impression.

5. Procédé selon l'une des revendications précédentes, **caractérisé en ce que**
dans le cas de pâtes de matière d'impression (42) sous forme de voxels (44), il est effectué un réajustement
a) d'une netteté de contour de l'objet (40) par réglage de la taille du voxel et/ou
b) d'une qualité de surface de l'objet (40) par réglage d'un décalage de voxel et/ou
c) d'une stabilité dimensionnelle de l'objet (40) par réglage d'une stratégie de déplacement du dispositif de décharge (24)
et, dans le cas de pâtes de matière d'impression (42) sous forme de barres (46), il est effectué un réajustement
d) d'une netteté de contour et d'une qualité de surface de l'objet (40) par réglage d'un débit volumique et/ou
e) d'une stabilité dimensionnelle de l'objet (40) par réglage d'une stratégie de déplacement du dispositif de décharge.

6. Procédé selon l'une des revendications précédentes, **caractérisé en ce qu'**une position de la tête d'impression (22) et/ou d'une plaque de base (30), sur laquelle l'objet (40) est disposé, peut être réajustée à une position exacte en fonction de la position, déterminée en continu, de la tête d'impression (22).

7. Procédé selon l'une des revendications précédentes, **caractérisé en ce que**, dans le cas de pâtes de matière d'impression (42) sous forme de barres (46), le placement des pâtes de matière d'impression (42) est effectué en fonction de la vitesse instantanée déterminée en continu, de la tête d'impression (22) par réglage d'un débit volumique.

8. Procédé selon l'une des revendications précédentes, **caractérisé en ce que** l'objet (40) est une pièce en élastomère, en particulier une pièce en élastomère de silicone.

9. Dispositif d'impression 3D (10) destiné à fabriquer un objet (40) dans le procédé d'impression 3D, ledit dispositif comprenant au moins une tête d'impression (22) pourvue d'au moins un dispositif de décharge (24),
le dispositif de décharge (24) comportant un moyen de commande (14) afin de placer les pâtes de matière d'impression (42) à des positions cibles afin de générer l'objet (40) de manière générative,
le dispositif d'impression 3D comportant un moyen de mesure de position (20) permettant de déterminer en continu la position de la tête d'impression (22),
le moyen de mesure de position (20) étant relié au moyen de commande (14) du dispositif de décharge (24),
et le dispositif de décharge (24) étant adapté pour placer les pâtes de matière d'impression (42) en fonction de la position, déterminée en continu, de la tête d'impression (22) et de la vitesse instantanée, déterminée en continu, de la tête d'impression (22).

10. Dispositif d'impression 3D (10) selon la revendication 9, **caractérisé en ce que** le dispositif de décharge (24) comporte au moins une buse de projection (28), commandée par le moyen de commande (14), et/ou un distributeur (26).

11. Dispositif d'impression 3D (10) selon la revendication 9 ou 10, **caractérisé en ce que** le moyen de mesure de position (20) comporte au moins un compteur de pas au niveau du moteur, un encodeur, une échelle optique, notamment une échelle en verre, un capteur GPS, un capteur radar, un capteur à ultrasons, un capteur LIDAR et/ou au moins une barrière lumineuse.

12. Dispositif d'impression 3D (10) selon l'une des revendications 9 à 11, **caractérisé en ce que** le dispositif d'impression 3D (10) comporte un appareil de commande principal (12) qui contient un gabarit de l'objet à imprimer (40), l'appareil de commande principal (12) et le moyen de commande (14) du dispositif de décharge (24) étant adaptés l'un à l'autre pour une communication bidirectionnelle.

13. Dispositif d'impression 3D (10) selon l'une des revendications 9 à 12, **caractérisé en ce que** le dispositif d'impression 3D (10) comporte plusieurs dispositifs de décharge (24), associés à une tête d'impression (22), qui sont adaptés pour placer des pâtes de matière d'impression (42) en fonction de la position, déterminée en continu, de la tête d'impression (22) et de la vitesse instantanée, déterminée en continu, de la tête d'impression (22).

14. Logiciel de mise en œuvre du procédé selon l'une des revendications 1 à 8, le logiciel étant exécuté sur un dispositif d'impression 3D (10) selon l'une des revendications 9-13.
